# EUROPEAN PATENT APPLICATION

(11) **EP 4 549 703 A1**
(43) Date of publication of application: **07.05.2025**
(21) Application number: 24203458.5
(22) Date of filing: 30.09.2024
(51) Int. Cl.: F01D 9/04, F23R 3/28, F01D 5/14, F23R 3/50, F02C 3/14, F02C 7/22

(54) **GAS TURBINE ENGINE WITH AN IMPROVED TEMPERATURE MEASURING ARRANGEMENT**

(30) Priority: 30.10.2023 GB 202316523
(71) Applicant: Rolls-Royce plc, London N1 9FX (GB)
(72) Inventor: Li, Haidong, Derby, DE24 8BJ (GB)
(74) Representative: Rolls-Royce plc

(57) **Abstract**

There is provided a gas turbine engine, the gas turbine engine comprising a compressor assembly, a combustor assembly having a first circumferential array of burner assemblies, a turbine assembly, and an exhaust assembly. The turbine assembly comprising a second circumferential array of high-pressure nozzle guide vanes, a high-pressure turbine assembly, a third circumferential array of outlet guide vanes, and a fourth circumferential array of temperature measurement rakes. Each temperature measurement rake comprises a plurality of temperature measurement sensors. A clocking position is defined by a relative circumferential orientation of the first circumferential array with the fourth circumferential array. A quantity of burner assemblies are positioned in the first circumferential array, and a quantity of temperature measurement rakes are positioned in the fourth circumferential array, such that there is a minimum quantity of five clocking positions between the fourth circumferential array, and the first circumferential array.

## Description

### Field of the Disclosure

The present disclosure relates to an improved combustor and turbine apparatus and particularly, but not exclusively, to an improved combustor and turbine apparatus for a gas turbine engine.

### Background to the Disclosure

There is a requirement to improve the fuel consumption and operational efficiency of gas turbine engines. It is known that an important contributor to the efficiency of a gas turbine engine is the combustor and turbine flow region. It is in this region that the highest thermal loads in the engine are experienced, the combustion process creates exhaust emission products and there is great potential for the improvement of efficiency.

It is further known that the flow fields through the combustor and turbine region are very non-uniform leading to difficulties in measuring gas temperatures of the flow through the combustor and turbine. It is therefore desirable to have an improved temperature measurement arrangement for the flow through the combustor and turbine.

The present disclosure relates to a clocking arrangement of a thermocouple rake in a gas turbine engine. The term clocking is known in the art of axial flow machinery. In the context of the present disclosure, the term clocking relates to arranging a circumferential position of one circumferential array of static components relative to another circumferential array of static components, where both circumferential arrays of vane components are positioned in the same gas flow path. The act of arranging the circumferential position refers to rotating one circumferential array of static components relative to another circumferential array of static components.

In the present context, the term static component is understood to include any or all of a combustor, a vane, and a temperature measurement rake.

### Statements of Disclosure

According to a first aspect of the present disclosure there is provided a
gas turbine engine, the gas turbine engine comprising, in axial flow sequence, a compressor assembly, a combustor assembly, a turbine assembly, and an exhaust assembly, the combustor assembly comprising a first circumferential array of N_{BURN} burner assemblies,
the turbine assembly comprising, in axial flow sequence, a second circumferential array of N_{NGV} high-pressure nozzle guide vanes, a turbine assembly, a third circumferential array of N_{OGV} outlet guide vanes, and a fourth circumferential array of temperature measurement rakes, each temperature measurement rake comprising a plurality of temperature measurement sensors,
a clocking position being defined by a relative circumferential orientation of the first circumferential array with the fourth circumferential array, in which a one temperature measurement rake in the fourth circumferential array, is aligned directly with a one burner in the first circumferential array, and
wherein, a quantity of burner assemblies (N_{BURN}) are positioned in the first circumferential array, and a quantity of temperature measurement rakes are positioned in the fourth circumferential array, such that there is a minimum quantity of five (5) clocking positions between the fourth circumferential array, and the first circumferential array.

The gas turbine engine of the present disclosure comprises *inter alia,* in axial flow sequence, a combustor assembly, an array of nozzle guide vanes (NGV), a turbine assembly, and an array of outlet guide vanes (OGV).

For any one or more of these guide vane arrays, a clocking position is defined as a unique relative circumferential orientation between the first circumferential array of burners, and any one of the downstream circumferential arrays of guide vanes. For the second circumferential array of NGVs, the clocking position includes a 'reference' one vane from the second circumferential array of NGVs being either aligned with one of the burners in the first circumferential array, or is aligned with the mid-point between any two adjacent burners in the first circumferential array. For any of the third circumferential array of OGVs, the clocking position relates to a 'reference' one vane from the third circumferential array of OGVs being aligned with one of the burners in the first circumferential array.

By selecting the quantities (N_{NGV}; N_{OGV}) of the second circumferential array of NGVs, and/or the third circumferential array of OGVs to have a minimum of five (5) clocking positions relative to the quantity N_{BURN} of combustion chamber burners, it becomes possible to obtain a better understanding of the temperature distribution across the gas flow passing through the turbine assembly.

An improved understanding of the temperature distribution within the turbine assembly allows the product performance to be better understood and makes optimising the product easier.

Optionally, each temperature measurement sensor is positioned within a corresponding one of the outlet guide vanes.

The outlet guide vanes are positioned in the gas flow that is exhausted from the turbine assembly and provide redirection for the gas flow as it enters the exhaust assembly. It is important to ensure that temperatures of the outlet guide vanes are known through the operating cycle of the engine to ensure efficient and safe engine operation.

Optionally, each temperature measurement sensor is positioned immediately downstream of a corresponding one of the outlet guide vanes or less than the outlet guide vanes but still have minimal 5 clocking positions against the first array burner.

Positioning the temperature measurement sensor downstream of the outlet guide vane provides for direct measurement of the gas flow exhausted from the turbine assembly without the need to account for the influence of the outlet guide vane material. This can provide a user with a direct turbine exhaust gas temperature measurement which, in turn, can improve the user's understanding of the temperature distribution through the turbine assembly and therefore the efficiency of the engine.

Optionally, the temperature measurement rake comprises a circumferential array of temperature measurement sensors in which a temperature measurement sensor is positioned circumferentially coincident each one of the outlet guide vanes or less than the outlet guide vanes but still have minimal 5 clocking positions against the first array burner.

In one arrangement, a temperature measurement sensor is positioned circumferentially coincident each one of the outlet guide vanes, which enables in a user to simultaneously measure exhaust gas temperatures at each of the outlet guide positions. This assists the user's understanding of the temperature distribution within the exhaust gas flow leaving the turbine assembly, and hence the efficiency of the engine in operation.

Optionally, the quantity of temperature measurement sensors is less than the quantity of outlet guide vanes (OGVs).

Optionally, the gas turbine engine further comprises a fan assembly, the fan assembly being positioned axially upstream of the compressor assembly.

The gas turbine engine of the present disclosure may, with the addition of a fan assembly positioned axially upstream of the gas turbine engine itself, be arranged to be the core engine in a turbofan gas turbine engine.

Optionally, the fan assembly has two or more fan stages, at least one of the fan stages comprising a plurality of fan blades defining the fan diameter D_{FAN}.

Providing the fan assembly with two or more fan stages enables the pressure ratio of the fan assembly to be increased without having to increase a fan diameter.

According to a second aspect of the present disclosure there is provided method for determining clocking positions for a combustor and turbine of a gas turbine engine, the method comprising the steps of:
(a) providing, in axial flow sequence, a compressor assembly, a combustor assembly, a turbine assembly, and an exhaust assembly;
(b) arranging the combustor assembly to comprise a first circumferential array of N_{BURN} burner assemblies;
(c) arranging the turbine assembly to comprise, in axial flow sequence, a second circumferential array of N_{NGV} nozzle guide vanes, a turbine assembly, a third circumferential array of N_{OGV} outlet guide vanes, and a fourth circumferential array of temperature measurement rakes, each temperature measurement rake comprising a plurality of temperature measurement sensors,
(d) defining a clocking position as a relative circumferential orientation of the first circumferential array with the fourth circumferential array, in which a one temperature measurement rake in the fourth circumferential array, is aligned directly with a one burner in the first circumferential array, and
(e) positioning the quantity of burner assemblies (N_{BURN}) in the first circumferential array, and the respective quantity of temperature measurement rakes in the fourth circumferential array, such that there is a minimum quantity of five (5) clocking positions between the fourth circumferential array, and the first circumferential array.

The gas turbine engine of the present disclosure comprises *inter alia,* in axial flow sequence, a combustor assembly, an array of nozzle guide vanes (NGV), a turbine assembly, and an array of outlet guide vanes (OGV).

For any one or more of these guide vane arrays, whether NGVs, or OGVs, a clocking position is defined as a unique relative circumferential orientation between the first circumferential array of burners, and any one of the second circumferential array of NGVs, and the third circumferential array of OGVs, in which a 'reference' one vane from any one of the second circumferential array of NGVs, and the third circumferential array of OGVs, is either aligned with one of the burners in the first circumferential array, or is aligned with the mid-point between any two adjacent burners in the first circumferential array.

By selecting the quantities (N_{NGV}; N_{OGV}) of the second circumferential array of NGVs, and/or the third circumferential array of OGVs to have a minimum of five (5) clocking positions relative to the quantity N_{BURN} of combustion chamber burners, it becomes possible to obtain a better understanding of the temperature distribution across the gas flow passing through the turbine assembly.

An improved understanding of the temperature distribution within the turbine assembly allows the product performance to be better understood and makes optimising the product easier.

As noted elsewhere herein, the present disclosure may relate to a turbofan gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core. The fan may comprise any number of stages, for example multiple stages. Each fan stage may comprise a row of fan blades and a row of stator vanes. The stator vanes may be variable stator vanes (in that their angle of incidence may be variable).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of compressor stages, for example multiple stages. Each compressor stage may comprise a row of rotor blades and a row of stator vanes. The stator vanes may be variable stator vanes (in that their angle of incidence may be variable). The row of rotor blades and the row of stator vanes may be axially offset from each other.

The or each turbine (for example the first turbine and second turbine as described above) may comprise any number of turbine stages, for example multiple stages. Each turbine stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The diameter of the fan may be measured across the engine centreline and between the tips of opposing fan blades at their leading edge. The fan diameter may be greater than (or on the order of) any of: 50 cm, 60 cm, 70 cm (around 27.5 inches), 80 cm (around 31.5 inches), 90 cm, 100 cm (around 39 inches), 110 cm (around 43 inches), 120 cm (around 47 inches), 130 cm (around 51 inches), 140 cm (around 55 inches), 150 cm (around 59 inches), or 160 cm (around 63 inches). The fan diameter may be in an inclusive range bounded by any two of the values in the previous sentence (i.e., the values may form upper or lower bounds), for example in the range of from 50 cm to 70 cm or 90 cm to 130 cm.

The fan face area may be calculated as π multiplied by the square of the fan tip radius.

The rotational speed of the fan may vary in use. Generally, the rotational speed is lower for fans with a higher diameter. Purely by way of non-limitative example, the rotational speed of the fan at cruise conditions may be less than 10000 rpm, for example less than 9000 rpm. Purely by way of further non-limitative example, the rotational speed of the fan at cruise conditions for an engine having a fan diameter in the range of from 50 cm to 90 cm (for example 60 cm to 80 cm or 65 cm to 75 cm) may be in the range of from 7000 rpm to 22000 rpm, for example in the range of from 7000 rpm to 16000 rpm, for example in the range of from 7500 rpm to 14000 rpm. Purely by way of further non-limitative example, the rotational speed of the fan at cruise conditions for an engine having a fan diameter in the range of from 90 cm to 150 cm may be in the range of from 4500 rpm to 12500 rpm, for example in the range of from 4500 rpm to 10000 rpm, for example in the range of from 6000 rpm to 10000 rpm.

In use of the turbofan gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.22, 0.23, 0.24, 0.25, 0.26, 0.27, 0.28, 0.29, 0.30, 0.31, 0.32, 0.33, 0.34, 0.35, 0.36, 0.37, 0.38, 0.39 or 0.40 (all values being dimensionless). The fan tip loading may be in an inclusive range bounded by any two of the values in the previous sentence (i.e., the values may form upper or lower bounds), for example in the range of from 0.28 to 0.31, or 0.29 to 0.30.

Turbofan gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 0.4, 0.5, 0.6, 0.7, 0.8, 0.9, 1.0, 1.1, 1.2, 1.3, 1.4, 1.5, 1.6, 1.7, 1.8, 1.9, 2.0, 2.4, 2.8, 3.2, 3.6, or 4.0. The bypass ratio may be in an inclusive range bounded by any two of the values in the previous sentence (i.e., the values may form upper or lower bounds), for example in the range of form of 0.4 to 1.0, 0.5 to 0.9, or 0.6 to 0.9. Alternatively, the bypass ratio may be in a bounded range in the form of 1.0 to 4.0, 1.8 to 3.6, or 2.4 to 3.6. The bypass duct may be substantially annular. The bypass duct may be radially outside the core engine. The radially outer surface of the bypass duct may be defined by a nacelle and/or a fan case.

The overall pressure ratio of a turbofan gas turbine engine as described and/or claimed herein may be defined as the ratio of the stagnation pressure upstream of the fan to the stagnation pressure at the exit of the highest-pressure compressor (before entry into the combustor). By way of non-limitative example, the overall pressure ratio of a gas turbine engine as described and/or claimed herein at cruise may be greater than (or on the order of) any of the following: 10, 15, 20, 25, 30, 35 or 40. The overall pressure ratio may be in an inclusive range bounded by any two of the values in the previous sentence (i.e., the values may form upper or lower bounds), for example in the range of from 20 to 35.

Specific thrust of a turbofan gas turbine engine may be defined as the net thrust of the engine divided by the total mass flow through the engine. At cruise conditions, the specific thrust of an engine as described and/or claimed herein may be less than (or on the order of) any of the following: 800 Nkg⁻¹s, 850 Nkg⁻¹s, 900 Nkg⁻¹s, 950 Nkg⁻¹s, 1000 Nkg⁻¹s, 1050 Nkg⁻¹s, 1100 Nkg⁻¹s, 1150 Nkg⁻¹s, 1200 Nkg⁻¹s, 1250 Nkg⁻¹s, 1300 Nkg⁻¹s, 1350 Nkg⁻¹s, or 1400 Nkg⁻¹s. The specific thrust may be in an inclusive range bounded by any two of the values in the previous sentence (i.e., the values may form upper or lower bounds), for example in the range of from 800 Nkg⁻¹s to 950 Nkg⁻¹s, or 900 Nkg⁻¹s to 1350 Nkg⁻¹s. Such engines may be particularly efficient in comparison with conventional gas turbine engines.

A turbofan gas turbine engine as described and/or claimed herein may have any desired maximum thrust. Purely by way of non-limitative example, a gas turbine as described and/or claimed herein may be capable of producing a maximum thrust of at least (or on the order of) any of the following: 20kN, 40kN, 60kN, 80kN, 100kN, 120kN, 140kN, 160kN, 180kN, or 200kN. The maximum thrust may be in an inclusive range bounded by any two of the values in the previous sentence (i.e., the values may form upper or lower bounds). Purely by way of example, a gas turbine as described and/or claimed herein may be capable of producing a maximum thrust in the range of from 60kN to 160kN, for example 70kN to 120kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high-pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1500K, 1550K, 1600K, 1650K, 1700K, 1750K, 1800K, 1850K, 1900K, 1950K, or 2000K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K, 2000K, 2050K, 2100K, 2150K, 2200K, 2250K or 2300K. The maximum TET may be in an inclusive range bounded by any two of the values in the previous sentence (i.e., the values may form upper or lower bounds), for example in the range of from 1800K to 2200K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium-based metal or an aluminium-based material (such as an aluminium-lithium alloy) or a steel-based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The turbofan gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan stage of a turbofan gas turbine engine as described and/or claimed herein may have any desired number of fan blades, for example 12, 14, 16, 18, 20, 22, 24, 26, 28, 30, 32, or 34 fan blades.

As used herein, cruise conditions have the conventional meaning and would be readily understood by the skilled person. In this regard, cruise conditions encompass both subsonic cruise conditions and supersonic cruise conditions. Thus, for a given turbofan gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent. Cruise conditions thus define an operating point of the gas turbine engine that provides a thrust that would ensure steady state operation (i.e., maintaining a constant altitude and constant Mach Number) at mid-cruise of an aircraft to which it is designed to be attached, taking into account the number of engines provided to that aircraft. For example, where an engine is designed to be attached to an aircraft that has two engines of the same type, at cruise conditions the engine provides half of the total thrust that would be required for steady state operation of that aircraft at mid-cruise.

In other words, for a given turbofan gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the subsonic cruise condition may be any point in the range of from Mach 0.80 to 0.99, for example 0.80 to 0.85, for example 0.85 to 0.90, for example 0.90 to 0.95, for example 0.95 to 0.99, for example in the region of Mach 0.80, in the region of Mach 0.85 or in the range of from 0.80 to 0.85. Any single speed within these ranges may be part of the cruise condition. For some aircraft, the cruise conditions may be outside these ranges, for example below Mach 0.80.

Purely by way of example, the forward speed at the supersonic cruise condition may be any point in the range of from Mach 1.20 to 2.20, for example 1.35 to 2.10, for example 1.50 to 2.05, for example in the region of Mach 2.00 or in the range of from 1.80 to 2.00. Any single speed within these ranges may be part of the cruise condition. For some aircraft, the cruise conditions may be outside these ranges, for example between Mach 1.0 and 1.20, or above Mach 2.20.

Purely by way of example, the supersonic cruise conditions may correspond to standard atmospheric conditions (according to the International Standard Atmosphere, ISA) at an altitude that is in the range of from 1 1000m to 19000m, for example in the range of from 12500m to 17000m, for example in the range of from 15000m to 17000m (around 56000 ft), for example in the range of from 16000m to 17000m, for example in the region of 17000m. The cruise conditions may correspond to standard atmospheric conditions at any given altitude in these ranges.

Purely by way of example, the subsonic cruise conditions may correspond to an operating point of the engine that provides a known required thrust level (for example a value in the range of from 40kN to 65kN) at a forward Mach number of 0.8 and standard atmospheric conditions (according to the International Standard Atmosphere) at an altitude of 38000ft (11582m). Purely by way of further example, the supersonic cruise conditions may correspond to an operating point of the engine that provides a known required thrust level (for example a value in the range of from 70kN to 120kN) at a forward Mach number of 1.50 and standard atmospheric conditions (according to the International Standard Atmosphere) at an altitude of 56000ft (17000m).

In use, a turbofan gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect of the disclosure, there is provided an aircraft comprising a turbofan gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect of the disclosure, there is provided a method of operating a turbofan gas turbine engine as described and/or claimed herein. The operation may be at the cruise conditions as defined elsewhere herein (for example in terms of the thrust, atmospheric conditions and Mach Number).

According to an aspect of the disclosure, there is provided a method of operating an aircraft comprising a turbofan gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic sectional view of a turbofan gas turbine engine according to the prior art;
Figure 2 shows a figurative view of combustor and turbine assemblies of a gas turbine engine according to a first embodiment of the disclosure; and
Figures 3A, 3B, 3C, and 3D provide a figurative representation of clocking positions for a gas turbine engine having a first circumferential array of three burners, and a fourth circumferential array of four outlet guide vanes.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

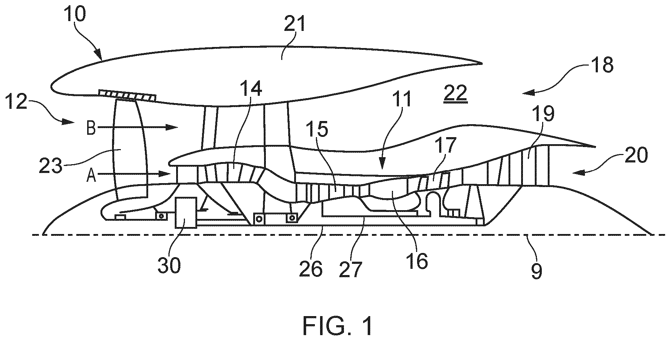

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high-pressure and low-pressure turbines 17, 19 before being exhausted through the nozzle 20 to provide some propulsive thrust. The high-pressure turbine 17 drives the high-pressure compressor 15 by a suitable interconnecting shaft 27. The fan 23 generally provides the majority of the propulsive thrust.

Note that the terms "low-pressure turbine" and "low-pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine. In some literature, the "low-pressure turbine" and "low-pressure compressor" referred to herein may alternatively be known as the "intermediate-pressure turbine" and "intermediate-pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

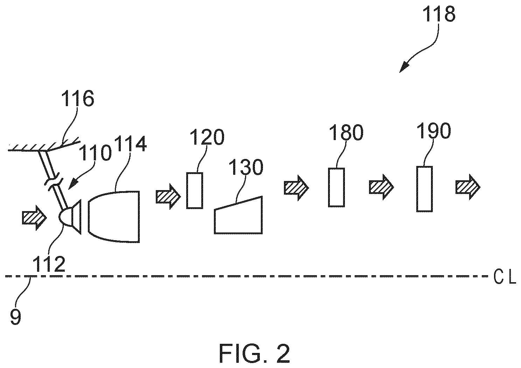

Figure 2 provides a figurative view of the combustor assembly 110, and the turbine assembly 130 of a gas turbine engine according to a first embodiment of the disclosure.

In the arrangement of Figure 2, a gas flow through the sequence of combustor assembly 110 and turbine assembly 130 is illustrated by the arrows in the direction from left to right of the page.

As shown in Figure 2, the gas flow passes around a first circumferential array 112 of N_{BURN} burner assemblies (sometimes referred to as fuel spray nozzles) and thence through the combustion chamber 114. After leaving the combustion chamber 114, the gas flow enters the turbine assembly 118.

In the embodiment shown, the turbine assembly 118 comprises, in axial flow sequence, a second circumferential array 120 of N_{NGV} nozzle guide vanes (NGVs), a turbine assembly 130, a third circumferential array 180 of N_{OGV} outlet guide vanes (OGVs), and a fourth circumferential array 190 of temperature measurement rakes.

In another embodiment of the disclosure, the turbine assembly 118 may further include one or more further pairs of circumferential arrays of nozzle guide vanes together with corresponding further turbine assemblies.

The fourth circumferential array 190 of temperature measurement rakes comprises a circumferential array of temperature measurement sensors. The circumferential array 190 may comprise a single temperature measurement rake that extends completely around a circumference of the engine's gas flow path. Alternatively, the circumferential array 190 may comprise a plurality of temperature measurement rakes, each of which extends around a portion of the circumference of the engine's gas flow path.

In an alternative arrangement, the fourth circumferential array 190 is arranged such that each temperature measurement sensor is positioned circumferentially coincident with a corresponding one of the outlet guide vanes.

In the present arrangement, each of the first circumferential array 112 of burners, the second circumferential array 120 of NGVs, and the third circumferential array 180 of OGVs, comprises an equi-spaced circumferential array. In other words, each of the respective burners 112 and guide vanes 120:180 is spaced circumferentially equally around the longitudinal axis 9 of the gas turbine engine.

A primary function of the nozzle guide vane array is to redirect the air flow onto the blades of the turbine assembly 130, so as to most efficiently extract rotational energy from the gas flow.

In a broadly similar manner, a primary function of the outlet guide vane array 180 is to efficiently direct the gas flow exiting the lowest-pressure turbine assembly 170 into the exhaust region of the gas turbine engine.

In addition to the above-mentioned primary functions, the nozzle guide vane array 120 and the outlet guide vane array 180 also have a secondary function, being to provide a structural load-bearing connection between the gas turbine engine core and the outer casings enclosing the engine.

For aerodynamic reasons, it is desirable that the guide vanes forming the second circumferential array 120 of NGVs, are not positioned circumferentially so as to be aligned in an axial direction. In other words, the vanes making up the axially sequential arrays 120:180 are not positioned directly ahead of or behind one another in an axial direction.

The term clocking is used to refer to the circumferential positioning of one axial array of static components relative to another axial array of static components in a multistage turbine engine. This relative positioning can be between any two axial arrays of static components in the engine. In the present disclosure, the axial arrays referred to herein are those of the burners (fuel spray nozzles), nozzle guide vanes (HP, IP, and/or LP), and outlet guide vanes.

As outlined above, a clocking position is defined by a relative circumferential orientation of one the axial arrays of static components with another of the axial arrays of static components. For example, considering the first circumferential array 112 of burners and the second circumferential array 120 of nozzle guide vanes (NGVs), a clocking position is defined when one NGV in the NGV array is aligned directly with one burner in the first circumferential array 112 array. In a similar manner, a clocking position can be defined between the first circumferential array 112 of burners, and any other of the third circumferential array 180 of OGVs.

The relative circumferential position of the first circumferential array 112 of burners with the second circumferential array 120 of NGVs enables the cooling of the NGV array to be improved. This can be achieved by minimising the quantity of clocking positions between the two respective arrays of static components. The relative circumferential position of the first circumferential array 112 of burners with the subsequent downstream OGV array enables the measurement of gas flow temperature to be improved; for example, by providing at least five instances of an OGV being aligned with a corresponding one of the burners in the first circumferential array 112.

The relative circumferential position of flow-adjacent ones of the second circumferential array 120 of NGVs, and the third circumferential array 180 of OGVs, provide for improved pressure measurement accuracy. In a similar manner to that outlined above, this is achieved, for example, by providing at least five instances of an NGV, and an OGV being aligned with a corresponding NGV, and OGV in a flow-adjacent array.

The relative circumferential position of the first circumferential array 112 of burners with the fourth circumferential array 190 of temperature measurement rakes enables the measurement of gas flow temperature to be improved.

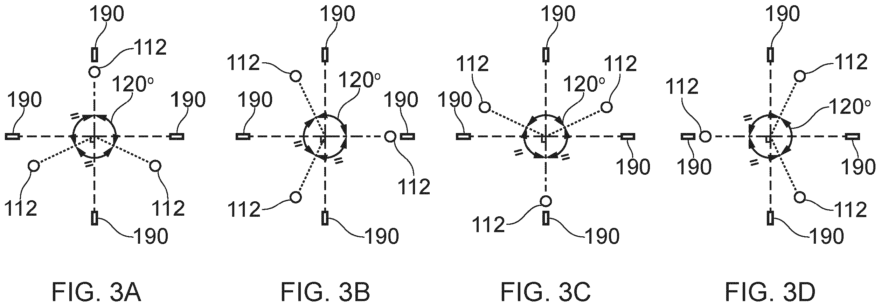

Figures 3A, 3B, 3C, and 3D provide a figurative and simplistic representation of clocking positions for a gas turbine engine having a first circumferential array 112 of three burners, and a fourth circumferential array 190 of temperature measurement rakes. The clocking position definition can be seen from the relative positioning of the burners and the temperature measurement rakes in Figures 3A-D.

Tables 1 and 2 below provide two examples of gas turbine engine configurations in accordance with the present disclosure.

**Table 1 - 'Small' engine (50kN thrust)**

| | Quantity of components | Maximum clocking positions against the Burner |
|---|---|---|
| Burners | 19 | - |
| HP NGVs | 38 | 2 |
| OGVs | 7 | 7 |
| T6 Rakes | 6 | 6 |

**Table 2 - 'Mid-range' engine (90kN thrust)**

| | Quantity of components | Maximum clocking positions against the Burner |
|---|---|---|
| Burners | 20 | - |
| HP NGVs | 40 | 2 |
| OGVs | 30 | 3 |
| T6 Rakes | 7 | 7 |

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine, the gas turbine engine comprising, in axial flow sequence, a compressor assembly, a combustor assembly, a turbine assembly, and an exhaust assembly, the combustor assembly comprising a first circumferential array of N_{BURN} burner assemblies,
the turbine assembly comprising, in axial flow sequence, a second circumferential array of N_{NGV} nozzle guide vanes, a turbine assembly, a third circumferential array of N_{OGV} outlet guide vanes, and a fourth circumferential array of temperature measurement rakes, each temperature measurement rake comprising a plurality of temperature measurement sensors,
a clocking position being defined by a relative circumferential orientation of the first circumferential array with the fourth circumferential array, in which a one temperature measurement rake in the fourth circumferential array, is aligned directly with a one burner in the first circumferential array, and
wherein, a quantity of burner assemblies (N_{BURN}) are positioned in the first circumferential array, and a quantity of temperature measurement rakes are positioned in the fourth circumferential array, such that there is a minimum quantity of five (5) clocking positions between the fourth circumferential array, and the first circumferential array.

2. The gas turbine engine as claimed in Claim 1, wherein each temperature measurement sensor is positioned within a corresponding one of the outlet guide vanes.

3. The gas turbine engine as claimed in Claim 1, wherein each temperature measurement sensor is positioned immediately downstream of a corresponding one of the outlet guide vanes.

4. The gas turbine engine as claimed in any one of Claims 1 to 3, wherein the temperature measurement rake comprises a circumferential array of temperature measurement sensors in which a temperature measurement sensor is positioned circumferentially coincident each one of the outlet guide vanes.

5. The gas turbine engines claimed in any one of Claims 1 to 4, wherein the quantity of temperature measurement sensors is less than the quantity of outlet guide vanes (OGVs).

6. The gas turbine engine as claimed in any one of Claims 1 to 5, wherein the gas turbine engine further comprises a fan assembly, the fan assembly being positioned axially upstream of the compressor assembly.

7. The gas turbine engine as claimed in Claim 6, wherein the fan assembly has two or more fan stages, at least one of the fan stages comprising a plurality of fan blades defining the fan diameter D_{FAN}.

8. A method for determining clocking positions for a combustor and turbine of a gas turbine engine, the method comprising the steps of:
(a) providing, in axial flow sequence, a compressor assembly, a combustor assembly, a turbine assembly, and an exhaust assembly;
(b) arranging the combustor assembly to comprise a first circumferential array of N_{BURN} burner assemblies;
(c) arranging the turbine assembly to comprise, in axial flow sequence, a second circumferential array of N_{NGV} nozzle guide vanes, a turbine assembly, a third circumferential array of N_{OGV} outlet guide vanes, and a fourth circumferential array of temperature measurement rakes, each temperature measurement rake comprising a plurality of temperature measurement sensors;
(d) defining a clocking position as a relative circumferential orientation of the first circumferential array with the fourth circumferential array, in which a one temperature measurement rake in the fourth circumferential array, is aligned directly with a one burner in the first circumferential array, and
(e) positioning the quantity of burner assemblies (N_{BURN}) in the first circumferential array, and the respective quantity of temperature measurement rakes in the fourth circumferential array, such that there is a minimum quantity of five (5) clocking positions between the fourth circumferential array, and the first circumferential array.
